# EUROPEAN PATENT APPLICATION

(11) **EP 4 462 712 A1**
(43) Date of publication of application: **13.11.2024**
(21) Application number: 23737099.4
(22) Date of filing: 05.01.2023
(51) Int. Cl.: H04L 5/00, H04W 24/02

(54) **INFORMATION CONFIGURATION METHOD AND APPARATUS, TRANSMISSION METHOD AND APPARATUS, BASE STATION, LMF, AND TERMINAL**

(30) Priority: 07.01.2022 CN 202210016657
(71) Applicant: Datang Mobile Communications Equipment Co., Ltd., Beijing 100085 (CN)
(72) Inventor: ZHANG, Bufang, Beijing 100085 (CN); ZHANG, Dajun, Beijing 100085 (CN); LI, Jianxiang, Beijing 100085 (CN)
(74) Representative: Studio Torta S.p.A.
(86) International application number: PCT/CN2023/070694
(87) International publication number: WO 2023/131237

(57) **Abstract**

An information configuration method, a transmission method, a device, a base station, a LMF and a terminal are provided. The information configuration method is applied to a base station, including: receiving positioning capability related information of a terminal which is sent by the terminal; receiving a third message sent by a location management function (LMF) entity, where the third message is configured to indicate Positioning Reference Signal (PRS) configuration information; and determining a configuration of the PRS processing window of the terminal, or determining a configuration of a positioning measurement interval of the terminal.

## Description

### CROSS REFERENCE OF RELATED APPLICATION

The present disclosure claims a priority of Chinese patent disclosure No. 202210016657.1 filed on January 7, 2022, which is incorporated herein by reference in its entirety.

### TECHNICAL FIELD

The present disclosure relates to the field of communication technology, and in particular to an information configuration method, a transmission method, a device, a base station, a LMF and a terminal.

### BACKGROUND

Currently, the base station is unable to configure the positioning reference signal (PRS) processing window and positioning measurement interval of the target positioning terminal. In order to enable the base station to support the configuration of the PRS processing window and positioning measurement interval of the target positioning terminal, a reasonable mechanism needs to be designed.

### SUMMARY

The present disclosure is to provide an information configuration method, a transmission method, an apparatus, a base station, a LMF and a terminal to solve the problem in the related art that the base station does not support the configuration of the PRS processing window and the positioning measurement interval of the target positioning terminal.

In a first aspect, an information configuration method is provided in the embodiment of the present disclosure, applied to a base station, including:
receiving positioning capability related information of a terminal which is sent by the terminal;
receiving a third message sent by a location management function (LMF) entity, where the third message is configured to indicate Positioning Reference Signal (PRS) configuration information; and
determining a configuration of the PRS processing window of the terminal, or determining a configuration of a positioning measurement interval of the terminal.

Optionally, the third message includes at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

Optionally, the PRS configuration information includes: PRS configuration information of a neighboring cell, and/or PRS configuration information of the terminal.

Optionally, the positioning capability related information of the terminal includes at least one of the following:
whether the terminal supports a capability of pre-configuring positioning measurement intervals; or
whether the terminal supports a capability related to the PRS processing window.

Optionally, whether the terminal supports the capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, subsequent to the determining the configuration of the PRS processing window of the terminal or determining the configuration of the positioning measurement interval of the terminal, the method further includes:
sending a fourth message to the LMF; where the fourth message includes at least one of the following:
the positioning capability related information;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

Optionally, prior to the receiving the positioning capability related information of the terminal sent by the terminal, the method further includes:
sending a request message to the terminal, where the request message is configured to request to obtain positioning capability related information of the terminal.

In a second aspect, an information transmission method is provided in the embodiment of the present disclosure, applied to a LMF entity, including:
sending a third message to a base station, where the third message is configured to indicate PRS configuration information.

Optionally, the third message includes at least one of the following:
an identifier related to a terminal;
an identifier related to the LMF;
an identifier related to a base station;
positioning capability related information;
indication information configured to request a base station to configure a measurement interval and/or a processing window; or
the PRS configuration information.

Optionally, the PRS configuration information includes: PRS configuration information of a neighboring cell, and/or PRS configuration information of a terminal.

Optionally, subsequent to the sending the third message to the base station, the method further includes:
receiving a fourth message sent by a base station, where the fourth message includes at least one of the following:
the positioning capability related information of a terminal;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

In a third aspect, an information transmission method is provided in the embodiment of the present disclosure, applied to a terminal, including:
sending positioning capability related information of the terminal to a base station.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports the capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, prior to the sending the positioning capability related information of the terminal to the base station, the method further includes:
receiving a request message sent by the base station, where the request message is configured to request to obtain the positioning capability related information of the terminal.

In a fourth aspect, a base station is provided in the embodiment of the present disclosure, including: a transceiver, a memory, a processor, and a computer program stored in the memory and executable on the processor; the processor is configured to read the program in the memory to perform:
receiving positioning capability related information of a terminal which is sent by the terminal;
receiving a third message sent by a location management function (LMF) entity, where the third message is configured to indicate Positioning Reference Signal (PRS) configuration information; and
determining a configuration of the PRS processing window of the terminal, or determining a configuration of a positioning measurement interval of the terminal.

Optionally, the third message includes at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

Optionally, the PRS configuration information includes: PRS configuration information of a neighboring cell, and/or PRS configuration information of the terminal.

Optionally, the positioning capability related information of the terminal includes at least one of the following:
whether the terminal supports a capability of pre-configuring positioning measurement intervals; or
whether the terminal supports a capability related to the PRS processing window.

Optionally, whether the terminal supports the capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the processor is further configured to read the program in the memory to perform:
sending a fourth message to the LMF; where the fourth message includes at least one of the following:
the positioning capability related information;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

Optionally, the processor is further configured to read the program in the memory to perform:
sending a request message to the terminal, where the request message is configured to request to obtain positioning capability related information of the terminal.

In a fifth aspect, a LMFs provided in the embodiment of the present disclosure, including: a transceiver, a memory, a processor, and a computer program stored in the memory and executable on the processor; the processor is configured to read the program in the memory to perform:
sending a third message to a base station, where the third message is configured to indicate PRS configuration information n.

Optionally, the third message includes at least one of the following:
an identifier related to a terminal;
an identifier related to the LMF;
an identifier related to a base station;
positioning capability related information;
indication information configured to request a base station to configure a measurement interval and/or a processing window; or
the PRS configuration information.

Optionally, the PRS configuration information includes: PRS configuration information of a neighboring cell, and/or PRS configuration information of a terminal.

Optionally, the processor is used to read the program in the memory to perform:
receiving a fourth message sent by a base station, where the fourth message includes at least one of the following:
the positioning capability related information of a terminal;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

In a sixth aspect, a terminal is provided in the embodiment of the present disclosure, including: a transceiver, a memory, a processor, and a computer program stored in the memory and executable on the processor; the processor is configured to read the program in the memory to perform:
sending positioning capability related information of the terminal to a base station.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports the capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the processor is configured to read the program in the memory to perform:
receiving a request message sent by the base station, where the request message is configured to request to obtain the positioning capability related information of the terminal.

In a seventh aspect, an information configuration device is provided in the embodiment of the present disclosure, applied to a base station, including:
a first information receiving module, configured to receive positioning capability related information of a terminal which is sent by the terminal;
a second information receiving module, configured to receive a third message sent by a location management function (LMF) entity, where the third message is configured to indicate Positioning Reference Signal (PRS) configuration information; and
a configuration determination module, configured to determine a configuration of the PRS processing window of the terminal, or determining a configuration of a positioning measurement interval of the terminal.

In an eighth aspect, an information transmission device is provided in the embodiment of the present disclosure, applied to a LMF entity, including:
a third message sending module, configured to send a third message to a base station, where the third message is configured to indicate PRS configuration information.

In a ninth aspect, an information transmission device is provided in the embodiment of the present disclosure, applied to a terminal, including:
a fourth message sending module, configured to send positioning capability related information of the terminal to a base station.

In a ninth aspect, a processor-readable storage medium is provided in the embodiment of the present disclosure, storing a computer program, where the computer program is configured to enable the processor to perform the information configuration method in the first aspect, or the information transmission method in the second aspect, or the information transmission method in the third aspect.

The beneficial effects of the above technical solution disclosed in the present invention are as follows:
In the above scheme, the base station receives the positioning capability related information of the terminal sent by the terminal; receives the third message sent by the location management function (LMF) entity, and the third message is configured to indicate the PRS configuration information; determines the configuration of the PRS processing window of the terminal according to the positioning capability related information, or determines the configuration of the positioning measurement interval of the terminal; or, according to the positioning capability related information and the PRS configuration information, enables the base station to support the precise configuration of the PRS processing window and positioning measurement interval of the target positioning terminal.

### BRIEF DESCRIPTION OF THE DRAWINGS

Fig.1 is a schematic diagram of a configuration process of a downlink PRS;
Fig. 2 is a second schematic diagram of a downlink PRS configuration process;
Fig.3 is a third schematic diagram of the configuration process of the downlink PRS;
Fig.4 is a schematic diagram of a mechanism for obtaining a positioning measurement interval;
Fig.5 is a schematic diagram of an information configuration method on a base station side according to an embodiment of the present disclosure;
Fig.6 is a schematic diagram of an information configuration method on the LMF entity side according to an embodiment of the present disclosure;
Fig.7 is a schematic diagram of an information configuration method on a terminal side according to an embodiment of the present disclosure;
Fig. 8 is a structural block diagram of an information configuration device at a base station side according to an embodiment of the present disclosure;
Fig.9 is a structural block diagram of an information transmission device at the LMF entity side according to an embodiment of the present disclosure;
Fig. 10 is a structural block diagram of an information configuration device on a terminal side according to an embodiment of the present disclosure;
Fig.11 is a block diagram of a hardware structure of a base station according to an embodiment of the present disclosure;
Fig.12 is a block diagram of the hardware structure of the LMF entity according to an embodiment of the present disclosure;
Fig.13 is a block diagram of the hardware structure of a terminal station according to an embodiment of the present disclosure;
Fig.14 is a second schematic diagram of the information configuration method at the base station side according to an embodiment of the present disclosure;
Fig.15 is a second schematic diagram of the information transmission method on the LMF entity side according to an embodiment of the present disclosure;
Fig.16 is a second schematic diagram of the information configuration method on the terminal side according to an embodiment of the present disclosure;
Fig.17 is a second structural block diagram of the information configuration device at the base station side according to an embodiment of the present disclosure;
Fig.18 is a second structural block diagram of the information transmission device at the LMF entity side according to an embodiment of the present disclosure;
Fig.19 is a second structural block diagram of the information configuration device on the terminal side according to an embodiment of the present disclosure;
Fig.20 is a second hardware structure block diagram of a base station according to an embodiment of the present disclosure;
Fig.21 is a second hardware structure block diagram of the LMF entity of an embodiment of the present disclosure; and
Fig. 22 is a second hardware structure block diagram of the terminal station according to an embodiment of the present disclosure.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The terminal device in the embodiment of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO (2D-MIMO), three-dimensional MIMO (3D-MIMO), full-dimensional MIMO (FD-MIMO) or massive MIMO, or it can be diversity transmission, precoded transmission or beamforming transmission, etc.

The following first introduces the contents involved in this disclosure.

### 1. Downlink Positioning Reference Signal in Release 16 (R16) PRS, DL-PRS) configuration process

(1) After the LMF obtains the DL-PRS resources pre-configured by the base station from the base station, it configures the corresponding DL-PRS resources for the UE based on the DL-PRS configuration information.

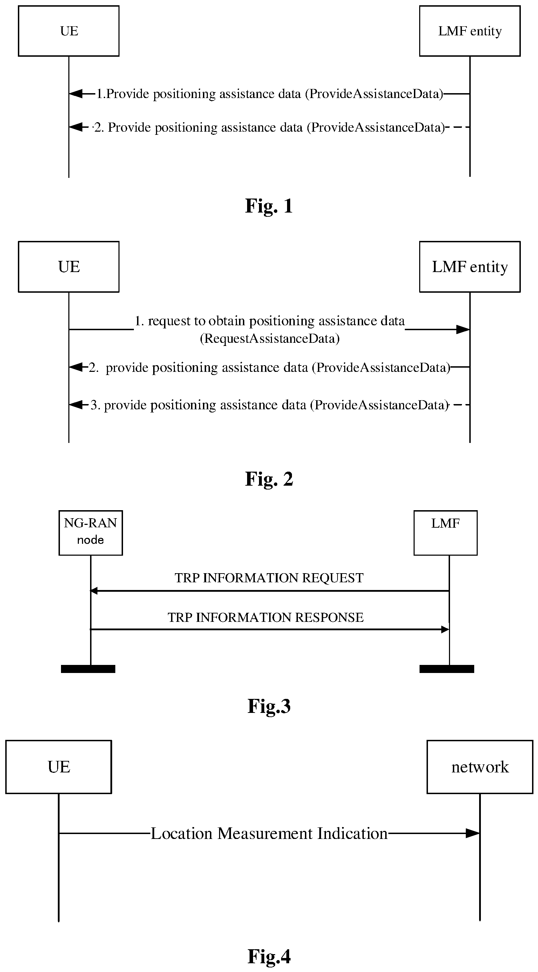

In R16 positioning technology, each transceiver point in the base station The LMF configures the corresponding DL-PRS resources at the base station reception point (TRP). When a positioning service arrives, the LMF obtains the configuration information of the DL-PRS pre-configured by the base station from the base station; after the LMF obtains the capability information of the base station, the LMF selects some DL-PRS resources from the DL-PRS configuration information and sends it to the UE as part of the positioning assistance data through the message of providing positioning assistance data (RequestAssistanceData) (Figure 1). Or when the LMF receives the RequestAssistanceData message from the UE, the LMF selects some DL-PRS resources from the DL-PRS configuration information and sends it to the UE as part of the positioning assistance data through the RequestAssistanceData message (Figure 2). There are two ways:

Method a. LMF actively provides positioning assistance data information to UE.

Step 1: LMF actively sends a ProvideAssistanceData message carrying DL-PRS configuration information to the UE.

Method b. The UE requests positioning assistance data information from the LMF.

Step 1: UE sends a RequestAssistanceData message to LMF.

Step 2: After receiving the message, LMF sends a ProvideAssistanceData message to the UE as a response, which carries the configuration information of DL-PRS.

### (2) LMF obtains the DL-PRS resources pre-configured by the base station

The base station configures the corresponding DL-PRS resources. When the LMF needs to obtain the DL-PRS resources configured by the base station, the LMF sends a TRP Information Request message to request the DL-PRS resources configured by the TRP under the base station.

Step 1: LMF sends a TRP Information Request message to the base station, requesting to obtain the DL-PRS resources configured by the TRP under the base station.

Step 2: The base station sends a TRP response message (information Response) to the LMF, and carries the configuration information of the PRS resources of different TRP configurations under the base station in the response message. Exemplarily, the Next Generation Radio Access Network (NG-RAN) node may include the above base station.

### 2. Mechanism for obtaining positioning measurement intervals in R16

For PRS-related positioning methods, including Observed Time Difference of Arrival (OTDOA), Downlink Angle of Departure (DL-AOD), Downlink Time Difference Of Arrival (DL-TDOA), Multi -Round Trip Time (Multi-RTT), etc., LMF obtains the PRS configuration information of the base station from the base station side. Then, LMF will configure the PRS configuration information of each UE (per-UE) for UE based on these cell-level PRS configuration information and refer to the positioning service quality (Quality of Service, QoS) and other information, and send it to UE through the dedicated signaling of the Long Term Evolution Positioning Protocol (LTE Positioning Protocol, LPP) or positioning broadcast. LTE is Long Term Evolution. Afterwards, UE will determine whether the current positioning requirements are met based on these per-UE PRS configuration information configured by LMF and the RRM measurement interval configured by the base station. If not, the UE will initiate a location measurement indication (LocationMeasurementIndication) message to the base station, which carries the requested PRS repetition time, offset, pointA and other related information to request the base station to configure the corresponding positioning measurement interval.

Currently, the base station is unable to configure the PRS (Positioning Reference Signal) processing window and the positioning measurement interval for the target localization terminal.

Based on the above, the embodiments of the present disclosure provide an information configuration method, a transmission method, an apparatus, a base station, an LMF and a terminal to solve the problem that the base station in the related art does not support the configuration of the PRS processing window and the positioning measurement interval of the target positioning terminal.

The method and the device are based on the same application concept. Since the method and the device solve the problem in a similar principle, the implementation of the device and the method can refer to each other, and the repeated parts will not be repeated.

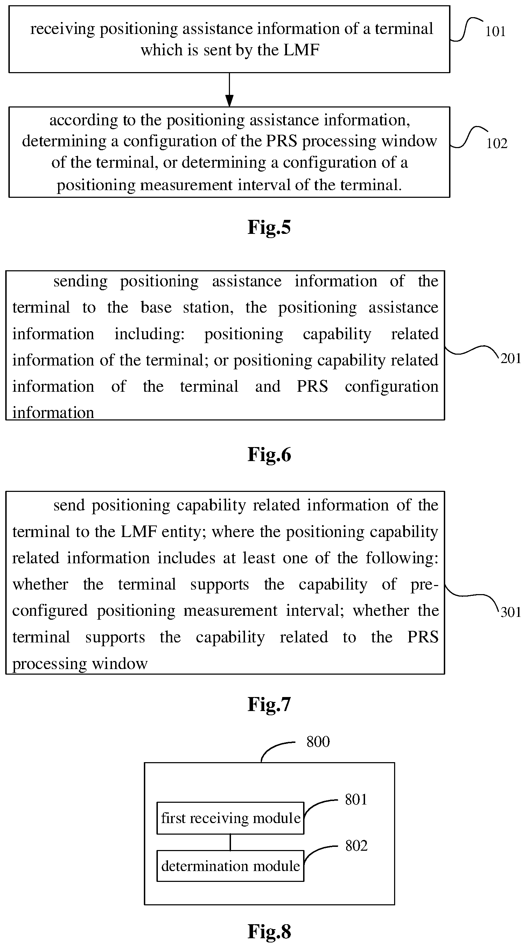

Referring to Fig.5, an embodiment of the present disclosure provides an information configuration method, which is applied to a base station and includes the following steps:

Step 101, receiving positioning assistance information of a terminal which is sent by the LMF;

The positioning assistance information includes: positioning capability related information of the terminal; or positioning capability related information of the terminal and PRS configuration information.

The PRS configuration information includes: PRS configuration information of a neighboring cell and/or PRS configuration information of the terminal. The neighboring cell refers to an adjacent cell around a base station.

The terminal's positioning capability-related information and PRS configuration information may be sent through the same message or through different messages, such as LMF sending the terminal's positioning capability-related information to the current serving base station through a New Radio Positioning Protocol A (NRPPa) message; or, LMF sending the terminal's positioning capability-related information and PRS configuration information to the current serving base station through an NRPPa message. NRPPa refers to the New Radio (NR) Positioning Protocol A.

Step 102: according to the positioning assistance information, determining a configuration of the PRS processing window of the terminal, or determining a configuration of a positioning measurement interval of the terminal.

When the positioning assistance information includes information related to positioning capability, the information related to positioning capability can assist the base station to configure the positioning reference signal PRS processing window more accurately, or configure the positioning measurement interval of the terminal; when the positioning assistance information includes information related to positioning capability and PRS configuration information, it can assist the base station to configure the positioning reference signal PRS processing window more accurately, or configure the positioning measurement interval of the terminal more accurately.

It should be pointed out that the positioning assistance information is not limited to the positioning capability related information of a terminal and PRS configuration information, for example, it also includes at least one of the following: identification information related to the terminal; identification information related to the LMF; identification information related to the base station; an indication of the terminal requesting to activate the measurement interval; an indication of the LMF requesting to activate the measurement interval.

In this embodiment, by ensuring that the current serving base station obtains the positioning assistance information of the target positioning terminal, the base station can be assisted in configuring and/or activating the positioning measurement interval, or the configuration related to the PRS processing window.

Referring to Fig. 6, an embodiment of the present application provides an information transmission method, which is applied to an LMF entity, including:

Step 201: sending positioning assistance information of the terminal to the base station, the positioning assistance information including: positioning capability related information of the terminal; or positioning capability related information of the terminal and PRS configuration information. Optionally, the PRS configuration information includes: PRS configuration information of neighboring cells, and/or PRS configuration information of the terminal.

In this embodiment, positioning assistance information of the terminal is sent to the base station, so that the base station determines the configuration of the positioning reference signal PRS processing window of the terminal or the configuration of the positioning measurement interval of the terminal according to the positioning assistance information.

In one embodiment, the method further includes: receiving the positioning capability related information sent by the terminal. In this embodiment, the positioning capability related information acquired by the LMF is sent by the terminal to the LMF, so that the LMF sends the positioning capability related information to the base station, where the base station determines the configuration of the positioning reference signal PRS processing window of the terminal according to the positioning capability related information, or determines the configuration of the positioning measurement interval of the terminal.

Referring to Fig. 7, an embodiment of the present application provides an information transmission method, which is applied to a terminal, including:
Step 301: send positioning capability related information of the terminal to the LMF entity; where the positioning capability related information includes at least one of the following: whether the terminal supports the capability of pre-configured positioning measurement interval; whether the terminal supports the capability related to the PRS processing window.

In this embodiment, the positioning capability related information is sent to the LMF so that the LMF sends the positioning capability related information to the base station, where the base station determines the configuration of the positioning reference signal PRS processing window of the terminal according to the positioning capability related information, or determines the configuration of the positioning measurement interval of the terminal.

Specifically, whether the terminal supports the capability related to the PRS processing window includes at least one of the following:
whether the terminal supports the capability of pre-configuring a PRS processing window;
whether the terminal supports the capability of configuring a PRS processing window;
capabilities related to processing priorities of PRS, synchronization signal SSB, channel state information reference signal CSI-RS, time reference signal TRS, data channel, and control channel within a PRS processing window supported by the terminal.

Furthermore, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

The above embodiments of the present disclosure are further described below in conjunction with the following examples.

This example defines the PRS processing window and positioning measurement interval related capabilities as positioning capabilities, that is, the case where the capabilities are reported to the LMF in the LPP protocol. The following steps may be included:
Step 1: LMF receives the LPP positioning capability message sent by the terminal (UE), which carries the UE's positioning measurement interval-related capabilities and/or pre-configured PRS processing window-related capabilities to the LMF;
The capability information related to the positioning measurement interval of the UE refers to whether the terminal supports the capability of pre-configured positioning measurement intervals; the capability related to the pre-configured PRS processing window of the UE refers to whether the terminal supports the capability related to the PRS processing window, including at least one of the following:
   whether the terminal supports the capability of pre-configuring a PRS processing window;
   whether the terminal supports the capability of configuring a PRS processing window;
   capabilities related to processing priorities of PRS, synchronization signal SSB, channel state information reference signal CSI-RS, time reference signal TRS, data channel, and control channel within a PRS processing window supported by the terminal.
Step 2: There are three ways:
   Step 2a: LMF determines the PRS configuration information of the UE. At the same time, LMF sends the first NRPPa message to the current serving base station and indicates at least one of the following positioning assistance information to the current serving base station: the related capability information of the positioning measurement interval of the UE, the capability related to the pre-configured PRS processing window of the UE, and the PRS configuration information of the UE. Or,
   Step 2b: LMF obtains the PRS configuration information of the neighboring cell. At the same time, LMF sends the first NRPPa message to the current serving base station and indicates at least one of the following positioning assistance information to the current serving base station: the related capability information of the positioning measurement interval of the UE, the capability related to the pre-configured PRS processing window of the UE, and the PRS configuration information of the neighboring cells of the serving base station of the UE. Or
   Step 2c: LMF sends the first NRPPa message to the current serving base station and indicates at least one of the following positioning assistance information to the current serving base station: capability information related to the positioning measurement interval of the UE and capability related to the pre-configured PRS processing window of the UE.

In the above steps 2a to 2c, the first NRPPa message may also carry at least one of the following positioning assistance information: identification information related to the terminal; identification information related to the LMF; identification information related to the base station; an indication of the terminal requesting to activate the measurement interval; an indication of the LMF requesting to activate the measurement interval.

Specifically, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Step 3: There are two ways:
Step 3a: The current serving base station determines to configure a measurement interval for the UE; and determines a corresponding measurement interval configuration. Or,
Step 3b: The current serving base station determines to configure a PRS processing window for the UE; and determines the configuration of the corresponding PRS processing window.

Step 4: There are two ways:
Step 4a: Optionally, for step 3a, the current serving base station sends a second NRPPa message (referring to the first message) to the LMF, where the message indicates that the current serving base station has configured a positioning measurement interval for the UE, and/or corresponding positioning measurement interval configuration information.
Step 4b: Optionally, for step 4b, the current serving base station sends a second NRPPa message to the LMF, where the message indicates that the current serving base station has configured a PRS processing window for the UE, and/or corresponding PRS processing window configuration information.

In the above steps 4a to 4b, the second NRPPa message includes at least one of the following: an identifier related to the terminal; an identifier related to the LMF; an identifier related to the base station; indication information for configuring the positioning measurement interval; indication information for configuring the PRS processing window; configuration of the positioning measurement interval; configuration of the PRS processing window.

The configuration of the positioning measurement interval includes but is not limited to the measurement interval identifier (ID), measurement interval length, offset, period, etc. The configuration of the PRS processing window includes but is not limited to the processing window ID, processing window type, processing window start time, period, length, subcarrier spacing of the current cell, etc.

Referring to Fig. 8, an embodiment of the present disclosure further provides an information configuration device 800, which is applied to a base station and includes:
a first receiving module 801, configured to receive the positioning assistance information of the terminal sent by the location management function (LMF) entity;
a determination module 802, configured to determine the configuration of the positioning reference signal PRS processing window of the terminal according to the positioning assistance information, or determine the configuration of the positioning measurement interval of the terminal.

Optionally, the positioning assistance information includes: positioning capability related information of the terminal; or positioning capability related information of the terminal and PRS configuration information.

Optionally, the PRS configuration information includes: PRS configuration information of a neighboring cell, and/or PRS configuration information of the terminal.

Optionally, the positioning assistance information further includes at least one of the following:
identification information related to the terminal;
identification information related to the LMF;
identification information related to the base station;
that the terminal requests activation of a measurement interval;

The LMF requests an indication of activation of a measurement interval.

Optionally, the positioning capability related information of the terminal includes at least one of the following:
the terminal supports a capability of pre-configuring positioning measurement intervals;
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the above device 800 further includes:
a configuration information sending module, configured to send a first message to the LMF, where the first message is configured to indicate configuration information related to the positioning measurement interval, or configuration information related to the PRS processing window.

Optionally, the first message includes at least one of the following: an identifier related to the terminal; an identifier related to the LMF; an identifier related to the base station; indication information for configuring the positioning measurement interval; indication information for configuring the PRS processing window; configuration of the positioning measurement interval; configuration of the PRS processing window.

It should be noted here that the above-mentioned device 800 provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

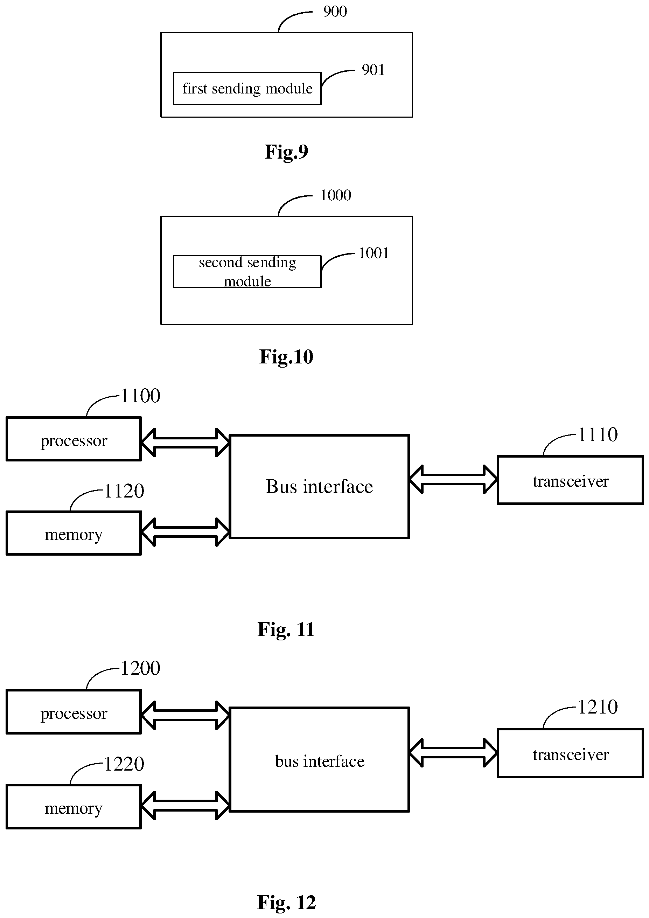

Referring to Fig. 9, an embodiment of the present disclosure further provides an information transmission device 900, which is applied to an LMF entity and includes:
a first sending module 901, configured to send positioning assistance information of the terminal to the base station, where the positioning assistance information includes: positioning capability related information of the terminal; or positioning capability related information of the terminal and PRS configuration information.

Optionally, the PRS configuration information includes: PRS configuration information of a neighboring cell, and/or PRS configuration information of the terminal.

Optionally, the positioning assistance information also includes at least one of the following: identification information related to the terminal; identification information related to the LMF; identification information related to the base station; an indication of the terminal requesting to activate the measurement interval; an indication of the LMF requesting to activate the measurement interval.

Optionally, the above device 900 further includes:
a second receiving module, configured to receive the positioning capability related information sent by the terminal.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the above device 900 further includes:
a configuration information receiving module, configured to receive a first message sent by a base station, where the first message is configured to indicate configuration information related to a positioning measurement interval or configuration information related to a processing window.

Optionally, the first message includes at least one of the following: an identifier related to the terminal; an identifier related to the LMF; an identifier related to the base station; indication information for configuring the positioning measurement interval; indication information for configuring the PRS processing window; configuration of the positioning measurement interval; configuration of the PRS processing window.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Referring to Fig. 10, an embodiment of the present disclosure further provides an information transmission device 1000, which is applied to a terminal and includes:
a second sending module 1001, configured to send the positioning capability related information of the terminal to the LMF entity; where the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program code.

Referring to Fig. 11, an embodiment of the present disclosure further provides a base station, including: a transceiver 1100, a memory 1120, a processor 1110, and a computer program stored in the memory 1120 and executable on the processor 1110; the processor 1110 is configured to read the program in the memory to perform:
receiving the terminal's positioning assistance information sent by the location management function (LMF) entity;
according to the positioning assistance information, determining the configuration of the positioning reference signal PRS processing window of the terminal, or the configuration of the positioning measurement interval of the terminal is determined.

The transceiver 1100 is used to receive and send data under the control of the processor 1110.

In Fig. 11, the bus architecture may include any number of interconnected buses and bridges, specifically one or more processors represented by processor 1110 and various circuits of memory represented by memory 1120 are linked together. The bus architecture may also link together various other circuits such as peripherals, voltage regulators, and power management circuits, which are well known in the art and are therefore not further described herein. The bus interface provides an interface. The transceiver 1100 may be a plurality of components, namely, a transmitter and a receiver, providing a unit for communicating with various other devices on a transmission medium, which transmission medium includes a wireless channel, a wired channel, an optical cable, and other transmission media. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field programmable gate array (FPGA) or a complex programmable logic device (CPLD). The processor may also adopt a multi-core architecture.

Referring to Fig. 12, an embodiment of the present disclosure further provides an LMF, including: a transceiver 1200, a memory 1220, a processor 1210, and a computer program stored in the memory 1220 and executable on the processor 1210; the processor 1210 is configured to read the program in the memory to perform:
sending the positioning assistance information of the terminal to the base station, the positioning assistance information includes:
positioning capability related information of a terminal; or,
positioning capability related information of a terminal and PRS configuration information.

The transceiver 1200 is used to receive and send data under the control of the processor 1210.

In Fig. 12, the bus architecture may include any number of interconnected buses and bridges, specifically one or more processors represented by processor 1210 and various circuits of memory represented by memory 1220 are linked together. The bus architecture may also link together various other circuits such as peripherals, voltage regulators, and power management circuits, which are well known in the art and are therefore not further described herein. The bus interface provides an interface. The transceiver 1200 may be a plurality of components, namely, a transmitter and a receiver, providing a unit for communicating with various other devices on a transmission medium, which transmission medium includes a wireless channel, a wired channel, an optical cable, and other transmission media. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field programmable gate array (FPGA) or a complex programmable logic device (CPLD). The processor may also adopt a multi-core architecture.

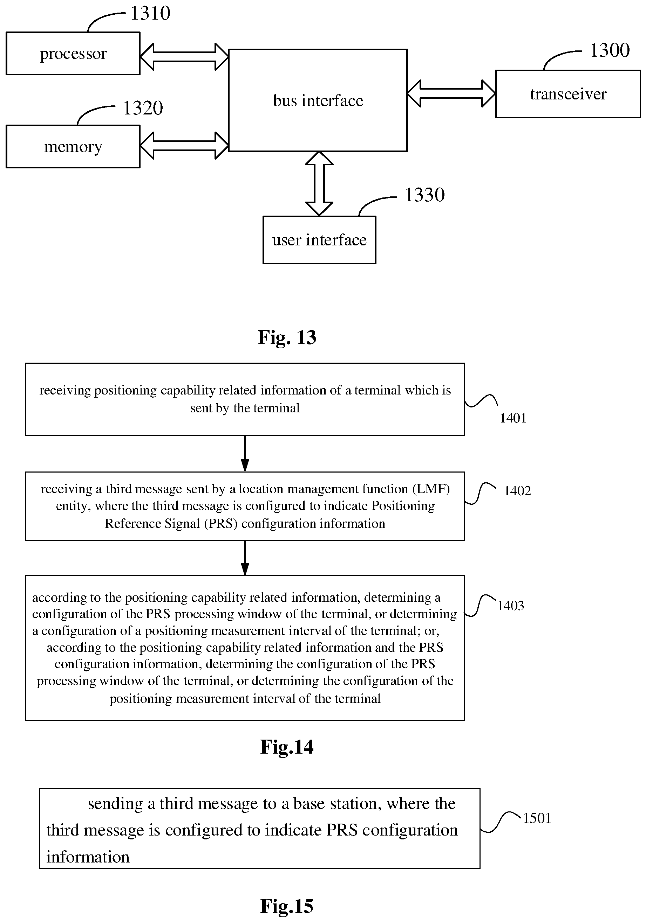

Referring to Fig. 13, an embodiment of the present disclosure further provides a terminal, including: a transceiver 1300, a memory 1320, a processor 1310, and a computer program stored in the memory 1320 and executable on the processor 1310; the processor 1310 is configured to read the program in the memory to perform:
sending the positioning capability related information of the terminal to the LMF entity; where the positioning capability related information includes at least one of the following:
whether the terminal supports a capability of pre-configuring positioning measurement intervals;
whether the terminal supports a capability related to the PRS processing window.

The transceiver 1300 is used to receive and send data under the control of the processor 1310.

In Figure 13, the bus architecture may include any number of interconnected buses and bridges, specifically one or more processors represented by processor 1310 and various circuits of memory represented by memory 1320 are linked together. The bus architecture can also link various other circuits such as peripherals, voltage regulators, and power management circuits together, which are all well known in the art and are therefore not further described herein. The bus interface provides an interface. The transceiver 1300 may be a plurality of components, namely, a transmitter and a receiver, providing a unit for communicating with various other devices on a transmission medium, and these transmission media include transmission media such as wireless channels, wired channels, and optical cables. For different user devices, the user interface 1330 may also be an interface that can connect externally or internally to required devices, and the connected devices include but are not limited to keypads, displays, speakers, microphones, joysticks, etc.

The processor 1310 is responsible for managing the bus architecture and general processing, and the memory 1320 can store data used by the processor 1300 when performing operations.

Optionally, whether the terminal supports a capability related to the PRS processing window includes at least one of the following:
whether the terminal supports the capability of pre-configuring a PRS processing window;
whether the terminal supports the capability of configuring a PRS processing window;
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the processor 1310 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.
execute any of the methods provided by the embodiments of the present disclosure according to the obtained executable instructions. The processor and the memory can also be arranged physically separately.

Further, in order to solve the problem that the base station does not support the configuration of the PRS processing window and positioning measurement interval of the target positioning terminal, the present disclosure also provides the following embodiments for the case where the PRS processing window and positioning measurement interval related capabilities are defined as wireless RAT capabilities.

Referring to Fig. 14, an embodiment of the present disclosure further provides an information configuration method, which is applied to a base station, including:
Step 1401, receiving positioning capability related information of a terminal which is sent by the terminal; and,
Step 1402: receiving a third message sent by a location management function (LMF) entity, where the third message is configured to indicate Positioning Reference Signal (PRS) configuration information;
Step 1403: according to the positioning capability related information, determining a configuration of the PRS processing window of the terminal, or determining a configuration of a positioning measurement interval of the terminal; or,
according to the positioning capability related information and the PRS configuration information, determining the configuration of the PRS processing window of the terminal, or determining the configuration of the positioning measurement interval of the terminal.

In this embodiment, by ensuring that the current serving base station obtains information related to positioning capability and PRS configuration information, the base station can be assisted in configuring and/or activating the positioning measurement interval or configuration related to the PRS processing window.

Optionally, the PRS configuration information includes: PRS configuration information of a neighboring cell, and/or PRS configuration information of the terminal.

Optionally, the third message includes at least one of the following: an identifier related to the terminal; an identifier related to the LMF; an identifier related to the base station; positioning capability related information; indication information for requesting the base station to feedback a pre-configured measurement interval and/or a processing window; and the PRS configuration information.

Optionally, after step 1403, the method further includes: sending a fourth message to the LMF, the fourth message including at least one of the following: the positioning capability related information; the terminal related identifier; the LMF related identifier; the base station related identifier; the positioning measurement interval of the terminal; the configuration information related to the positioning measurement interval; and the configuration information related to the PRS processing window.

The configuration related to the positioning measurement interval includes but is not limited to the measurement interval ID, measurement interval length, offset, period, etc. The configuration related to the PRS processing window includes but is not limited to the processing window ID, processing window type, processing window start time, period, length, subcarrier spacing of the current cell, etc.

Optionally, the method further includes: sending a request message to the terminal, where the request message is configured to request positioning capability related information of the terminal.

Exemplarily, the base station sends an NRPPa message to the terminal to request positioning capability related information of the terminal. After receiving the NRPPa message, the terminal sends the positioning capability related information to the base station.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Referring to Fig. 15, an embodiment of the present disclosure further provides an information transmission method, which is applied to an LMF entity, including:
Step 1501: sending a third message to a base station, where the third message is configured to indicate PRS configuration information, so that the base station determines the configuration of the positioning reference signal PRS processing window of the terminal according to the PRS configuration information, or determines the configuration of the positioning measurement interval of the terminal.

Optionally, the PRS configuration information includes: PRS configuration information of a neighboring cell, and/or PRS configuration information of the terminal.

Optionally, the third message includes at least one of the following: an identifier related to the terminal; an identifier related to the LMF; an identifier related to the base station; positioning capability related information of the terminal; indication information for requesting the base station to feedback a pre-configured measurement interval and/or a processing window; and the PRS configuration information.

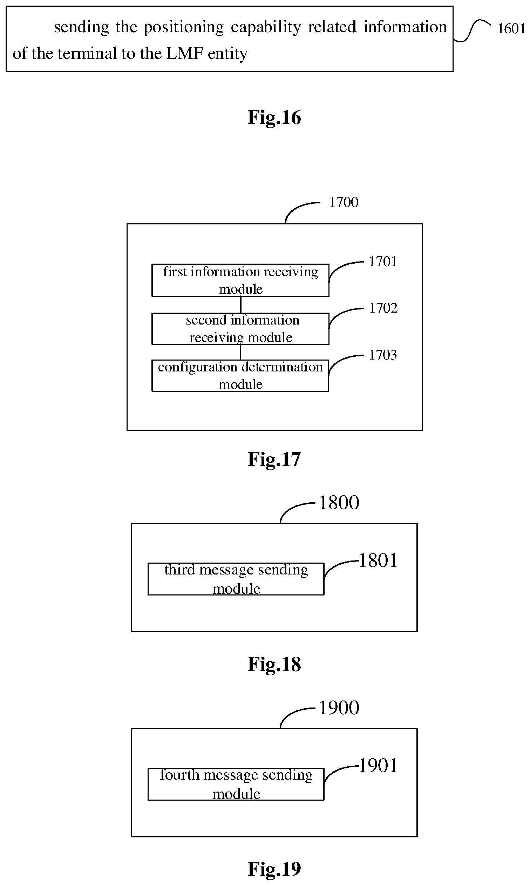

Referring to Fig. 16, an embodiment of the present disclosure further provides an information transmission method, which is applied to a terminal and includes:

Step 1601, sending the positioning capability related information of the terminal to the LMF entity, so that the base station determines the configuration of the positioning reference signal PRS processing window of the terminal according to the positioning capability related information, or determines the configuration of the positioning measurement interval of the terminal.

The above method is described below with reference to specific examples.

It should be noted that the following example is for a case where the PRS processing window and positioning measurement interval related capabilities are defined as wireless RAT capabilities, and includes the following steps:
Step 1 (optional): The base station sends a radio resource control (RRC) request message to the UE, instructing the UE to report its positioning measurement interval and/or capability information related to the pre-configured PRS processing window;
Step 2: The UE reports positioning capability related information, including: capability information related to the positioning measurement interval, and/or capability information related to the pre-configured PRS processing window to the current serving base station;
The capability information related to the positioning measurement interval of the UE refers to: whether the terminal supports the capability of pre-configuring the positioning measurement interval;
The capability related to the pre-configured PRS processing window of the UE refers to whether the terminal supports the capability related to the PRS processing window, including at least one of the following:
   whether the terminal supports a capability of pre-configuring the PRS processing window;
   whether the terminal supports a capability of configuring the PRS processing window; or
   capabilities related to processing priorities of PRS, synchronization signal SSB, channel state information reference signal CSI-RS, time reference signal TRS, data channel, and control channel within a PRS processing window supported by the terminal.

Specifically, a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Step 3: The current serving base station receives the third NRPPa message sent by the LMF, where the third NRPPa message is configured to provide the UE's PRS configuration to the current serving base station.

Optionally, the third NRPPa message is also used to request the current serving base station to provide the positioning measurement interval of the terminal to be positioned, and/or positioning capability information related to the PRS processing window.

Step 4: The current serving base station determines whether to configure a measurement interval for the UE or a processing window for the UE according to the positioning measurement interval of the UE and/or the capability information related to the pre-configured PRS window; and determines the configuration of the corresponding measurement interval (for the case where the measurement interval is determined to be configured for the UE), or determines the configuration of the corresponding PRS processing window (for the case where the measurement processing window mechanism is determined to be configured for the UE).

the measurement interval ID, measurement interval length, offset, period, etc. The configuration of the PRS processing window includes but is not limited to the processing window ID, processing window type, processing window start time, period, length, subcarrier spacing of the current cell, etc.

Step Sa: The current serving base station feeds back a fourth NRPPa message to the LMF, where the message indicates that the current serving base station has configured a PRS processing window for the UE, and/or corresponding PRS processing window configuration information.

Step 5b: The current serving base station feeds back a fourth NRPPa message to the LMF, where the message indicates that the current serving base station has configured a positioning measurement interval for the UE, and/or corresponding positioning measurement interval configuration information.

In the above steps 5a and 5b, the fourth NRPPa message includes at least one of the following: positioning capability related information of the terminal; an identifier related to the terminal; an identifier related to the LMF; an identifier related to the base station; the positioning measurement interval of the terminal; configuration information related to the positioning measurement interval; configuration information related to the PRS processing window.

The configuration related to the positioning measurement interval includes but is not limited to the measurement interval ID, measurement interval length, offset, period, etc. The configuration related to the PRS processing window includes but is not limited to the processing window ID, processing window type, processing window start time, period, length, subcarrier spacing of the current cell, etc.

Referring to Fig. 17, an embodiment of the present disclosure further provides an information configuration device 1700, which is applied to a base station and includes:
a first information receiving module 1701, configured to receive positioning capability related information of a terminal which is sent by the terminal;
a second information receiving module 1702, configured to receive a third message sent by a location management function (LMF) entity, where the third message is configured to indicate Positioning Reference Signal (PRS) configuration information; and
a configuration determination module 1703, configured to determine a configuration of the PRS processing window of the terminal, or determining a configuration of a positioning measurement interval of the terminal; or,
according to the positioning capability related information and the PRS configuration information, determine the configuration of the PRS processing window of the terminal, or determine the configuration of the positioning measurement interval of the terminal.

Optionally, the PRS configuration information includes: PRS configuration information of a neighboring cell, and/or PRS configuration information of the terminal.

Optionally, the third message includes at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

Optionally, the device 1700 further includes:
a first message sending module, configured to send a fourth message to the LMF, where the fourth message includes at least one of the following:
the positioning capability related information;
an identifier related to the terminal;
an identifier related to the LMF;
an identifier related to the base station;
a positioning measurement interval of the terminal;
configuration information related to the positioning measurement interval;
configuration information related to the PRS processing window.

Optionally, the device 1700 further includes:
a second message sending module, configured to send a request message to the terminal, where the request message is configured to request to obtain positioning capability related information of the terminal.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Referring to Fig. 18, an embodiment of the present disclosure further provides an information transmission device 1800, which is applied to an LMF entity and includes:
a third message sending module 1801, configured to send a third message to a base station, where the third message is configured to indicate PRS configuration information.

Optionally, the PRS configuration information includes: PRS configuration information of a neighboring cell, and/or PRS configuration information of the terminal.

Optionally, the third message includes at least one of the following:
an identifier related to a terminal;
an identifier related to the LMF;
an identifier related to a base station;
positioning capability related information;
indication information configured to request a base station to configure a measurement interval and/or a processing window; or
the PRS configuration information.

Optionally, the device 1800 further includes:
a third information receiving module, configured to receive a fourth message sent by the base station, and the fourth message includes at least one of the following: positioning capability related information of the terminal; an identifier related to the terminal; an identifier related to the LMF; an identifier related to the base station; a positioning measurement interval of the terminal; configuration information related to the positioning measurement interval; and configuration information related to the PRS processing window.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Referring to Fig. 19, an embodiment of the present disclosure further provides an information transmission device 1900, which is applied to a terminal and includes:
a fourth message sending module 1901, configured to send the positioning capability related information of the terminal to the LMF entity.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

It should be noted here that the above-mentioned device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

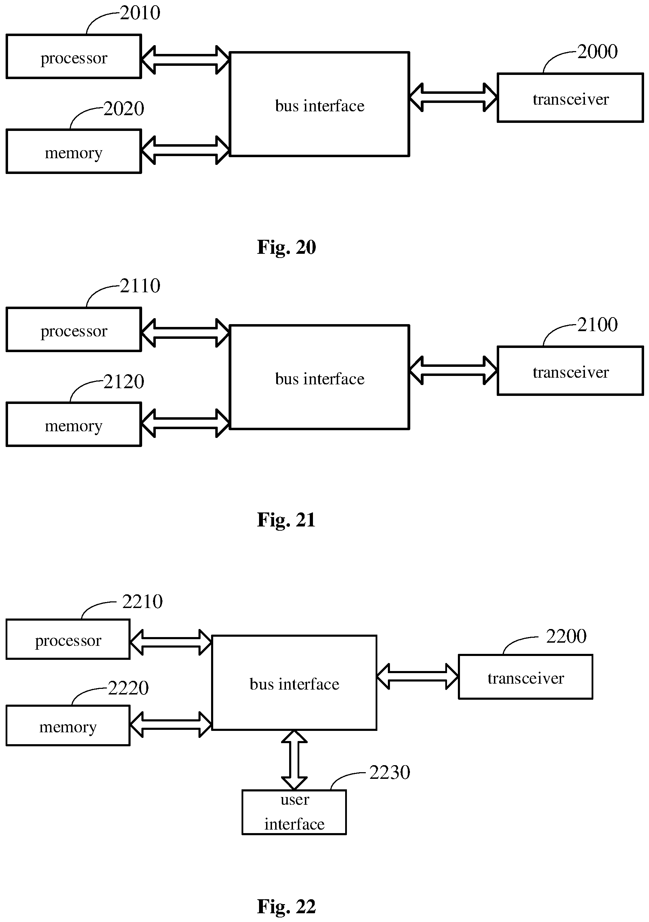

Referring to Fig. 20, an embodiment of the present disclosure further provides a base station, including: a transceiver 2000, a memory 2020, a processor 2010, and a computer program stored in the memory 2020 and executable on the processor 2010; the processor 2010 is configured to read the program in the memory to perform:
receiving positioning capability related information of the terminal sent by the terminal; and
receiving a third message sent by the LMF entity, where the third message is configured to indicate PRS configuration information;
determining, according to the positioning capability related information, the configuration of the PRS processing window of the terminal, or determine the configuration of the positioning measurement interval of the terminal; or,
according to the positioning capability related information and the PRS configuration information, the configuration of the PRS processing window of the terminal is determined, or the configuration of the positioning measurement interval of the terminal is determined.

The transceiver 2000 is used to receive and send data under the control of the processor 2010.

In Fig. 20, the bus architecture may include any number of interconnected buses and bridges, specifically one or more processors represented by the processor 2010 and various circuits of the memory represented by the memory 2020 are linked together. The bus architecture may also link together various other circuits such as peripherals, voltage regulators, and power management circuits, which are well known in the art and are therefore not further described herein. The bus interface provides an interface. The transceiver 2000 may be a plurality of components, namely, a transmitter and a receiver, and provide a unit for communicating with various other devices on a transmission medium, which transmission medium includes a wireless channel, a wired channel, an optical cable, and other transmission media. The processor 2010 is responsible for managing the bus architecture and general processing, and the memory 2020 may store data used by the processor 2010 when performing operations. The processor 2010 may be a central processing unit (CPU), an application specific integrated circuit (ASIC), a field programmable gate array (FPGA), or a complex programmable logic device (CPLD), and the processor may also adopt a multi-core architecture.

Optionally, the PRS configuration information includes: PRS configuration information of a neighboring cell, and/or PRS configuration information of the terminal.

Optionally, the third message includes at least one of the following: an identifier related to the terminal; an identifier related to the LMF; an identifier related to the base station; positioning capability related information; indication information for requesting the base station to feedback a pre-configured measurement interval and/or a processing window; and the PRS configuration information.

Optionally, the processor 2010 is further configured to read a program in a memory to perform:
sending a fourth message to the LMF, where the fourth message includes at least one of the following: the positioning capability related information; the terminal related identifier; the LMF related identifier; the base station related identifier; the positioning measurement interval of the terminal; the configuration information related to the positioning measurement interval; and the configuration information related to the PRS processing window.

Optionally, the processor 2010 is further configured to read a program in a memory to perform:
sending a request message to the terminal, where the request message is configured to request to obtain positioning capability related information of the terminal.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Referring to Fig. 21, an embodiment of the present disclosure further provides an LMF, including: a transceiver 2100, a memory 2120, a processor 2110, and a computer program stored in the memory 2120 and executable on the processor 2110; the processor 2110 is configured to read the program in the memory to perform:
sending a third message to the base station, where the third message is configured to indicate PRS configuration information.

The transceiver 2100 is used to receive and send data under the control of the processor 2110.

In Figure 21, the bus architecture may include any number of interconnected buses and bridges, specifically one or more processors represented by processor 2110 and various circuits of memory represented by memory 2120 are linked together. The bus architecture can also link various other circuits such as peripherals, voltage regulators, and power management circuits together, which are all well known in the art, so they are not further described herein. The bus interface provides an interface. The transceiver 2100 can be a plurality of components, namely, a transmitter and a receiver, and provide a unit for communicating with various other devices on a transmission medium, which includes a wireless channel, a wired channel, an optical cable, and other transmission media. The processor 2110 is responsible for managing the bus architecture and general processing, and the memory 2120 can store data used by the processor 2110 when performing operations. The processor 2110 can be a central processing unit (CPU), an application specific integrated circuit (ASIC), a field programmable gate array (FPGA), or a complex programmable logic device (CPLD), and the processor can also adopt a multi-core architecture.

Optionally, the PRS configuration information includes: PRS configuration information of a neighboring cell, and/or PRS configuration information of the terminal.

Optionally, the third message includes at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

Optionally, the processor 2110 is further configured to read a program in a memory to perform:
receive a fourth message sent by the base station, the fourth message including at least one of the following: positioning capability related information of the terminal; an identifier related to the terminal; an identifier related to the LMF; an identifier related to the base station; a positioning measurement interval of the terminal; configuration information related to the positioning measurement interval; and configuration information related to the PRS processing window.

Optionally, the positioning capability related information includes at least one of the following:
whether the terminal supports a capability of pre-configuring positioning measurement intervals; or
whether the terminal supports a capability related to the PRS processing window.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Referring to Fig. 22, an embodiment of the present disclosure further provides a terminal, including: a transceiver 2200, a memory 2220, a processor 2210, and a computer program stored in the memory 2220 and executable on the processor 2210; the processor 2210 is configured to read the program in the memory to perform:
sending the positioning capability related information of the terminal to the LMF entity.

The transceiver 2200 is used to receive and send data under the control of the processor 2210.

In Figure 22, the bus architecture may include any number of interconnected buses and bridges, specifically one or more processors represented by processor 2210 and various circuits of memory represented by memory 2220 are linked together. The bus architecture can also link various other circuits such as peripherals, voltage regulators, and power management circuits together, which are all well known in the art and are therefore not further described herein. The bus interface provides an interface. The transceiver 2200 may be a plurality of components, namely, a transmitter and a receiver, providing a unit for communicating with various other devices on a transmission medium, and these transmission media include transmission media such as wireless channels, wired channels, and optical cables. For different user devices, the user interface 2230 may also be an interface capable of externally and internally connecting required devices, and the connected devices include but are not limited to a keypad, a display, a speaker, a microphone, a joystick, and the like.

The processor 2210 is responsible for managing the bus architecture and general processing, and the memory 2220 can store data used by the processor 2200 when performing operations.

Optionally, the positioning capability related information includes at least one of the following: whether the terminal supports the capability of pre-configuring positioning measurement intervals; whether the terminal supports capabilities related to PRS processing windows.

Optionally, whether the terminal supports a capability related to the PRS processing window includes at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

Optionally, the capabilities related to processing priorities of PRS, synchronization signal SSB, channel state information reference signal CSI-RS, time reference signal TRS, data channel, and control channel within a PRS processing window supported by the terminal include at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

Optionally, the processor 2210 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture. The processor calls a computer program stored in the memory to execute any of the methods provided in the embodiments of the present disclosure according to the obtained executable instructions. The processor and the memory may also be arranged physically separately.

An embodiment of the present disclosure provides a processor-readable storage medium, where the processor-readable storage medium stores a computer program, and the computer program is used to enable the processor to execute the method described above.

The processor-readable storage medium may be any available medium or data storage device that can be accessed by the processor, including but not limited to magnetic storage (e.g., floppy disk, hard disk, magnetic tape, magnetic optical disk (MO), etc.), optical storage (e.g., compact disc (CD), digital video disc (DVD), Blu-ray Disc (BD), high-definition versatile disc (HVD), etc.), and semiconductor storage (e.g., read-only memory (ROM), erasable programmable read-only memory (EPROM), electrically erasable programmable read-only memory (EEPROM), non-volatile memory (NAND FLASH), solid-state drives (SSD), etc.).

Among them, the above-mentioned implementation embodiments applied to the base station side, LMF side and terminal side are all applicable to the embodiments of the processor-readable storage medium, and can also achieve the same technical effect.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, a module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first," "second," etc., in the description and claims of the present disclosure are used to distinguish similar items, rather than to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non -exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating the inclusion of single A, single B, single C, and A and B are present, B and C are present, A and C are present, and A, B and C are present in 7 situations. Similarly, the use of "at least one of A and B" in the specification and claims should be understood as "single A, single B, or A and B are present".

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. An information configuration method, applied to a base station, comprising:
receiving positioning capability related information of a terminal which is sent by the terminal;
receiving a third message sent by a location management function (LMF) entity, wherein the third message is configured to indicate Positioning Reference Signal (PRS) configuration information; and
determining a configuration of the PRS processing window of the terminal, or determining a configuration of a positioning measurement interval of the terminal.

2. The information configuration method according to claim 1, wherein the third message comprises at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

3. The information configuration method according to claim 1, wherein the PRS configuration information comprises: PRS configuration information of a neighboring cell, and/or PRS configuration information of the terminal.

4. The information configuration method according to claim 1, wherein the positioning capability related information of the terminal comprises at least one of the following:
whether the terminal supports a capability of pre-configuring positioning measurement intervals; or
whether the terminal supports a capability related to the PRS processing window.

5. The information configuration method according to claim 4, wherein whether the terminal supports the capability related to the PRS processing window comprises at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

6. The information configuration method according to claim 5, wherein the capabilities related to processing priorities of PRS, synchronization signal SSB, channel state information reference signal CSI-RS, time reference signal TRS, data channel, and control channel within a PRS processing window supported by the terminal comprise at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

7. The information configuration method according to claim 1, wherein subsequent to the determining the configuration of the PRS processing window of the terminal or determining the configuration of the positioning measurement interval of the terminal, the method further comprises:
sending a fourth message to the LMF; wherein the fourth message comprises at least one of the following:
the positioning capability related information;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

8. The information configuration method according to claim 1, wherein prior to the receiving the positioning capability related information of the terminal sent by the terminal, the method further comprises:
sending a request message to the terminal, wherein the request message is configured to request to obtain positioning capability related information of the terminal.

9. An information transmission method, applied to a LMF entity, comprising:
sending a third message to a base station, wherein the third message is configured to indicate PRS configuration information.

10. The information transmission method according to claim 9, wherein the third message comprises at least one of the following:
an identifier related to a terminal;
an identifier related to the LMF;
an identifier related to a base station;
positioning capability related information;
indication information configured to request a base station to configure a measurement interval and/or a processing window; or
the PRS configuration information.

11. The information transmission method according to claim 9, wherein the PRS configuration information comprises: PRS configuration information of a neighboring cell, and/or PRS configuration information of a terminal.

12. The information transmission method according to claim 9, wherein subsequent to the sending the third message to the base station, the method further comprises:
receiving a fourth message sent by a base station, wherein the fourth message comprises at least one of the following:
the positioning capability related information of a terminal;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

13. An information transmission method, applied to a terminal, comprising:
sending positioning capability related information of the terminal to a base station.

14. The information transmission method according to claim 13, wherein the positioning capability related information comprises at least one of the following:
whether the terminal supports a capability of pre-configuring positioning measurement intervals; or
whether the terminal supports a capability related to the PRS processing window.

15. The information transmission method according to claim 14, wherein whether the terminal supports the capability related to the PRS processing window comprises at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

16. The information transmission method according to claim 15, wherein the capabilities related to processing priorities of PRS, synchronization signal SSB, channel state information reference signal CSI-RS, time reference signal TRS, data channel, and control channel within a PRS processing window supported by the terminal comprise at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

17. The information configuration method according to claim 13, wherein prior to the sending the positioning capability related information of the terminal to the base station, the method further comprises:
receiving a request message sent by the base station, wherein the request message is configured to request to obtain the positioning capability related information of the terminal.

18. A base station, comprising: a transceiver, a memory, a processor, and a computer program stored in the memory and executable on the processor; the processor is configured to read the program in the memory to perform:
receiving positioning capability related information of a terminal which is sent by the terminal;
receiving a third message sent by a location management function (LMF) entity, wherein the third message is configured to indicate Positioning Reference Signal (PRS) configuration information; and
determining a configuration of the PRS processing window of the terminal, or determining a configuration of a positioning measurement interval of the terminal.

19. The base station according to claim 18, wherein the third message comprises at least one of the following:
an identifier related to the terminal;
an identifier related to the LMF;
an identifier related to the base station;
the positioning capability related information;
indication information configured to request a base station to configure a measurement interval and/or a processing window; or
the PRS configuration information.

20. The base station according to claim 18, wherein the PRS configuration information comprises: PRS configuration information of a neighboring cell, and/or PRS configuration information of the terminal.

21. The base station according to claim 18, wherein the positioning capability related information of the terminal comprises at least one of the following:
whether the terminal supports a capability of pre-configuring positioning measurement intervals; or
whether the terminal supports a capability related to the PRS processing window.

22. The base station according to claim 21, wherein whether the terminal supports the capability related to the PRS processing window comprises at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

23. The base station according to claim 22, wherein the capabilities related to processing priorities of PRS, synchronization signal SSB, channel state information reference signal CSI-RS, time reference signal TRS, data channel, and control channel within a PRS processing window supported by the terminal comprise at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

24. The base station according to claim 18, wherein the processor is further configured to read the program in the memory to perform:
sending a fourth message to the LMF; wherein the fourth message comprises at least one of the following:
the positioning capability related information;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

25. The base station according to claim 18, wherein the processor is further configured to read the program in the memory to perform:
sending a request message to the terminal, wherein the request message is configured to request to obtain positioning capability related information of the terminal.

26. A LMF comprising: a transceiver, a memory, a processor, and a computer program stored in the memory and executable on the processor; the processor is configured to read the program in the memory to perform:
sending a third message to a base station, wherein the third message is configured to indicate PRS configuration information.

27. The LMF according to claim 26, wherein the third message comprises at least one of the following:
an identifier related to a terminal;
an identifier related to the LMF;
an identifier related to a base station;
positioning capability related information;
indication information configured to request a base station to configure a measurement interval and/or a processing window; or
the PRS configuration information.

28. The LMF according to claim 26, wherein the PRS configuration information comprises: PRS configuration information of a neighboring cell, and/or PRS configuration information of a terminal.

29. The LMF according to claim 26, wherein the processor is used to read the program in the memory to perform:
receiving a fourth message sent by a base station, wherein the fourth message comprises at least one of the following:
the positioning capability related information of a terminal;
an identifier related to the terminal;
an identifier related to the LMF;
an identifier related to the base station;
a positioning measurement interval of the terminal;
configuration information related to the positioning measurement interval;
configuration information related to the PRS processing window;
indication information of positioning measurement interval being configured; or
indication information of PRS processing window being configured.

30. A terminal comprising: a transceiver, a memory, a processor, and a computer program stored in the memory and executable on the processor; the processor is configured to read the program in the memory to perform:
sending positioning capability related information of the terminal to a base station.

31. The terminal according to claim 30, wherein the positioning capability related information comprises at least one of the following:
whether the terminal supports a capability of pre-configuring positioning measurement intervals; or
whether the terminal supports a capability related to the PRS processing window.

32. The terminal according to claim 31, wherein whether the terminal supports the capability related to the PRS processing window comprises at least one of the following:
whether the terminal supports a capability of pre-configuring the PRS processing window;
whether the terminal supports a capability of configuring the PRS processing window; or
capabilities related to processing priorities of PRS, synchronization signal SSB, channel state information reference signal CSI-RS, time reference signal TRS, data channel, and control channel within a PRS processing window supported by the terminal.

33. The terminal according to claim 32, wherein the capabilities related to processing priorities of PRS, synchronization signal SSB, channel state information reference signal CSI-RS, time reference signal TRS, data channel, and control channel within a PRS processing window supported by the terminal comprise at least one of the following:
in each symbol within the PRS measurement window, a processing priority of the PRS on each component carrier CC or partial bandwidth BWP is higher than processing priorities of SSB, CSI-RS, TRS, data channel, and control channel;
in each symbol within the PRS measurement window, a processing priority of the PRS on a preset CC or BWP is higher than processing priorities of the SSB, CSI-RS, TRS, data channel, and control channel;
in each symbol within the PRS measurement window, a processing priority of the PRS on a preset CC or BWP is higher than processing priorities of the CC or BWP corresponding to the SSB, CSI-RS, TRS, data channel, and control channel; or
in a PRS symbol within the PRS measurement window, a processing priority of the PRS is higher than processing priorities of synchronization signal SSB, channel state information reference signal CSI-RS, time reference signal TRS, data channel, and control channel.

34. The terminal according to claim 30, wherein the processor is configured to read the program in the memory to perform:
receiving a request message sent by the base station, wherein the request message is configured to request to obtain the positioning capability related information of the terminal.

35. An information configuration device, applied to a base station, comprising:
a first information receiving module, configured to receive positioning capability related information of a terminal which is sent by the terminal;
a second information receiving module, configured to receive a third message sent by a location management function (LMF) entity, wherein the third message is configured to indicate Positioning Reference Signal (PRS) configuration information; and
a configuration determination module, configured to determine a configuration of the PRS processing window of the terminal, or determining a configuration of a positioning measurement interval of the terminal.

36. An information transmission device, applied to a LMF entity, comprising:
a third message sending module, configured to send a third message to a base station, wherein the third message is configured to indicate PRS configuration information.

37. An information transmission device, applied to a terminal, comprising:
a fourth message sending module, configured to send positioning capability related information of the terminal to a base station.

38. A processor-readable storage medium storing a computer program, wherein the computer program is configured to enable the processor to perform the information configuration method according to any one of claims 1 to 8, or the information transmission method according to any one of claims 9 to 12, or the information transmission method according to any one of claims 13 to 17.
